# EUROPÄISCHE PATENTSCHRIFT

(11) **EP 2 454 504 B1**
(45) Veröffentlichungstag und Bekanntmachung des Hinweises auf die Patenterteilung: **23.10.2013**
(21) Anmeldenummer: 10730380.2
(22) Anmeldetag: 07.07.2010
(51) Int. Cl.: F16H 57/033

(54) **GETRIEBEMOTOR UND HERSTELLVERFAHREN FÜR EINEN GETRIEBEMOTOR**
GEAR MOTOR, AND PRODUCTION METHOD FOR A GEAR MOTOR
MOTO-RÉDUCTEUR ET PROCÉDÉ DE FABRICATION D'UN MOTO-RÉDUCTEUR

(30) Priorität: 14.07.2009 DE 102009033259
(43) Veröffentlichungstag der Anmeldung: 23.05.2012
(73) Patentinhaber: SEW-EURODRIVE GmbH & Co. KG, 76646 Bruchsal (DE)
(72) Erfinder: HUBER, Harald, 76694 Forst (DE); KRAHL, Florian, 76835 Weyher (DE)
(74) Vertreter: Tüngler, Eberhard
(86) Internationale Anmeldenummer: PCT/EP2010/004089
(87) Internationale Veröffentlichungsnummer: WO 2011/006600

(56) Entgegenhaltungen:
- EP-A1- 0 974 774
- JP-A- 61 233 245
- US-A- 6 029 532

## Beschreibung

Die Erfindung betrifft einen Getriebemotor und ein Herstellverfahren für einen Getriebemotor.

Es ist allgemein bekannt, dass Getriebe ein Gehäuse umfassen.

Aus der US 6 029 532 A ist ein modular aufgebauter Getriebemotor bekannt.

Aus der EP 0 974 774 A1, gemäß dem Oberbegriff des Anspruchs 1, ist ebenfalls ein modular aufgebauter Getriebemotor bekannt.

Aus der JP 61 233245 A ist bekannt, die Position der Zahnräder im Getriebe zu wechseln.

Der Erfindung liegt daher die Aufgabe zugrunde, ein Getriebe weiterzubilden, wobei die Fertigung einfacher und kostengünstiger sein soll bei gleichzeitiger kompakter Ausführung.

Erfindungsgemäß wird die Aufgabe bei dem Getriebemotor nach den in Anspruch 1 und bei dem Herstellverfahren nach den in Anspruch 11 angegebenen Merkmalen gelöst.

Wichtige Merkmale der Erfindung bei dem Getriebemotor sind, dass er mit einem Gehäuse, das zumindest ein Gehäuseteil, einen Zwischenflansch und ein Lagerschild umfasst, ausgeführt ist,
wobei das Gehäuseteil, der Zwischenflansch und das Lagerschild verbunden sind, wobei der Zwischenflansch zwischen dem Gehäuseteil und dem Lagerschild angeordnet ist,
wobei das Lagerschild ein Lager zur Lagerung der Motorwelle des Motors aufnimmt,
wobei der Zwischenflansch zwei Lager einer Zwischenwelle aufnimmt.

Von Vorteil ist dabei, dass in einfacher Weise eine hohe Varianz mit wenigen Bauteilen erreichbar ist. Denn die gesamte Zwischenstufe ist am Zwischenflansch vorsehbar. Durch Weglassen der Zwischenstufe ist ein Getriebe mit einer niedrigeren Stufenzahl herstellbar. Somit ist das höher stufige Getriebe ohne besonderen Aufwand herstellbar.

Weiter von Vorteil ist dabei, dass die Zwischenstufe sogar vormontierbar ist vor dem Einfügen zwischen Gehäuseteil und Lagerschild.

Bei einer vorteilhaften Ausgestaltung weist die Zwischenwelle eine erste Verzahnung auf oder ein eine erste Verzahnung tragendes Teil, die mit einer mit der Motorwelle verbundenen Verzahnung im Eingriff steht. Von Vorteil ist dabei, dass nach Herausnehmen der Zwischenwelle mit Zwischenflansch die Verzahnung der Motorwelle direkt in Eingriff bringbar ist mit einem Zahnrad der nachfolgenden Zwischenstufe.

Bei einer vorteilhaften Ausgestaltung umfasst die Zwischenwelle eine ringartige äußere Struktur, an der eine Haltestruktur ausgebildet ist, die zwei ringförmige Abschnitte umfasst, welche die Lager der Zwischenwelle aufnehmen und andererseits über zumindest einen Verbindungssteg verbunden sind. Von Vorteil ist dabei, dass eine möglichst leichte Struktur geschaffen ist, so dass die durch die zusätzliche Getriebestufe bedingte Massenerhöhung gering ist.

Bei einer vorteilhaften Ausgestaltung sind die Lager jeweils axial gesichert mittels eines Sicherungsrings. Von Vorteil ist dabei, dass einfache kostengünstige Maßnahmen zur Sicherung ausreichen.

Bei einer vorteilhaften Ausgestaltung ist die ringartige äußere Struktur zwischen Gehäuseteil und Lagerschild angeordnet, insbesondere wobei der axiale Bereich der ringartigen äußeren Struktur verschieden ist vom axialen Bereich des Gehäuseteils und des Lagerschilds. Von Vorteil ist dabei, dass eine axial auskragende Haltestruktur verwendbar ist zum Halten eines Lagers der Zwischenwelle. Somit ist die axiale Breite der ringartigen äußeren Struktur geringer als die gesamte axiale Breite des Zwischenflansches.

Bei einer vorteilhaften Ausgestaltung ist der axiale Bereich der ringartigen äußeren Struktur verschieden vom axialen Bereich des Verbindungsstegs und der ringförmigen Abschnitte. Von Vorteil ist dabei, dass somit bei einem Einbringen des Zwischenflansches die axiale Breite des so erzeugten Getriebes nur gering anwächst und der axiale Bereich einer anderen Stufe nutzbar ist.

Bei einer vorteilhaften Ausgestaltung weist der Zwischenflansch zumindest an seiner dem Gehäuseteil zugewandten Seite eine ununterbrochene Ringnut auf, in der ein O-Ring einbringbar ist zum Herstellen einer dichten Verbindung zwischen Gehäuseteil und Zwischenflansch. Von Vorteil ist dabei, dass eine sehr gute Dichtheit herstellbar ist, da keine Unterbrechungen vorliegen.

Bei einer vorteilhaften Ausgestaltung weist der Zwischenflansch zumindest an seiner dem Lagerschild zugewandten Seite eine ununterbrochene Ringnut auf, in der ein O-Ring einbringbar ist zum Herstellen einer dichten Verbindung zwischen Lageschild und Zwischenflansch. Von Vorteil ist dabei, dass eine kostengünstige Dichtung herstellbar ist.

Bei einer vorteilhaften Ausgestaltung ist der Zwischenflansch ein Quadrafflansch oder Rundflansch. Von Vorteil ist beim Quadratflansch, dass eine kompakte Variante herstellbar ist, wobei die Schrauben radial außerhalb der Ringnut in radial herausstehenden Eckbereichen vorsehbar sind.

Bei einer vorteilhaften Ausgestaltung sind die Verbindungsschrauben zur Verbindung des Lagerschildes mit dem Zwischenflansch und/oder dem Gehäuseteil radial außerhalb der Ringnut vorgesehen sind, insbesondere in radial herausstehenden Eckbereichen eines Quadrattlansches, in welchem die kreisförmige Ringnut angeordnet ist. Von Vorteil ist dabei, dass in platzsparender Weise das Getriebe mit einer ununterbrochenen Ringnut zur Abdichtung ausstattbar ist und die Verbindungskraft außerhalb des abgedichteten Bereichs erzeugt wird.

Wichtige Merkmale bei dem Herstellverfahren für einen Getriebemotor mit einer wählbaren Getriebestufenzahl sind, dass bei einer gewählten ersten Stufenzahl der Getriebemotor nach einem der vorangegangenen Ansprüche hergestellt wird, wobei ein Distanzrohr axial neben eine auf einer Welle des Getriebes drehfest verbundenen Zahnrades angeordnet ist, wobei das Distanzrohr
- bei der ersten, insbesondere höheren, Stufenzahl des Getriebes, insbesondere bei einer dreistufigen Ausführung, motorseitig vom Zahnrad angeordnet wird,
- bei einer zweiten, insbesondere niedrigeren, insbesondere um eins niedrigeren Stufenzahl des Getriebes, insbesondere bei einer zweistufigen Ausführung, auf der vom Motor abgewandten Seite des Zahnrades angeordnet wird.

Von Vorteil ist dabei, dass in einfacher Weise die Verzahnung axial verschieden positionierbar ist mittels des Distanzrohrs. Somit ist bei einer zwei- oder dreistufigen Variante ein verschiedener axialer Abstand zum Motor hin bzw. zu den Motorwellenlagern hin erzeugbar.

Bei einer vorteilhaften Ausgestaltung wird bei der zweiten Stufenzahl das Gehäuseteil direkt mit dem Lagerschild verbunden, also wird kein Zwischenflansch vorgesehen. Von Vorteil ist dabei, dass ohne Aufwand ein zwei oder ein dreistufiges Getriebe herstellbar ist. Nur die Zwischenstufe samt Zwischenflansch ist dabei einzubauen oder nicht.

Weitere Vorteile ergeben sich aus den Unteransprüchen.

Die Erfindung wird nun anhand von Abbildungen näher erläutert:

In der Figur 1 ist ein Querschnitt durch ein erfindungsgemäßes Getriebe mit einem teilweise gezeigten, direkt angebauten Elektromotor gezeigt.

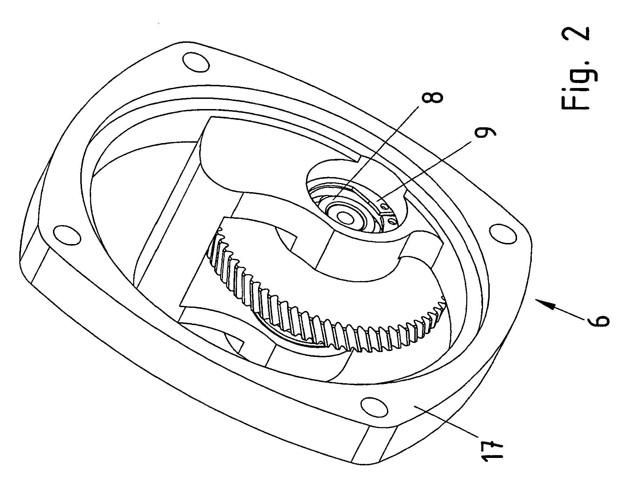

In der Figur 2 ist ein zugehöriger Zwischenflansch in Schrägansicht gezeigt.

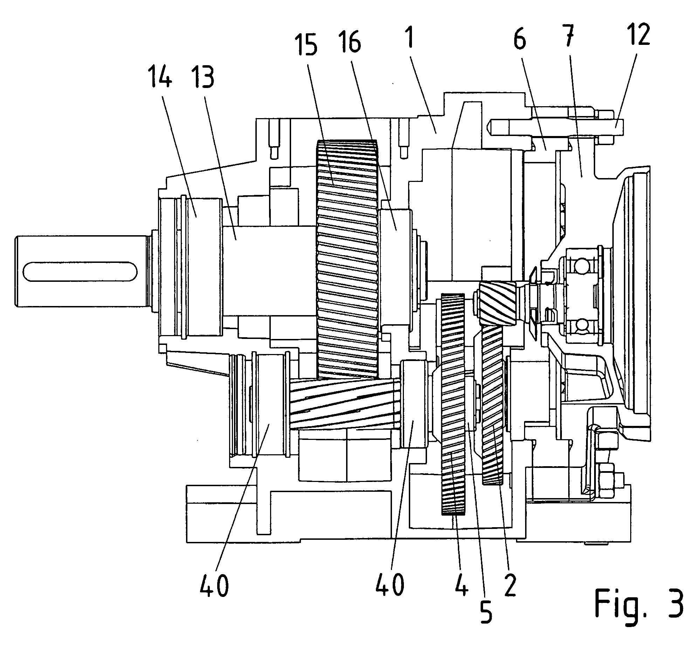

In der Figur 3 ist der Zwischenflansch aus einer anderen Blickrichtung gezeigt.

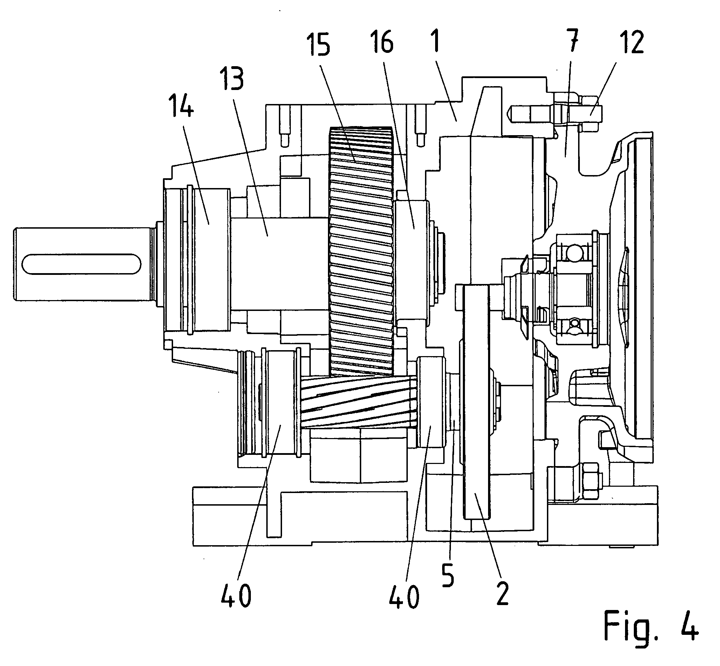

In der Figur 4 ist eine **gemäß dem erfindungsgemäßen Verfahren hergestellte** zweistufige Variante derselben Baugröße der Baureihe gezeigt, wobei ein Distanzrohr 5 abtriebsseitig angeordnet ist, und somit das Zahnrad 2 näher an den Motor anordenbar ist.

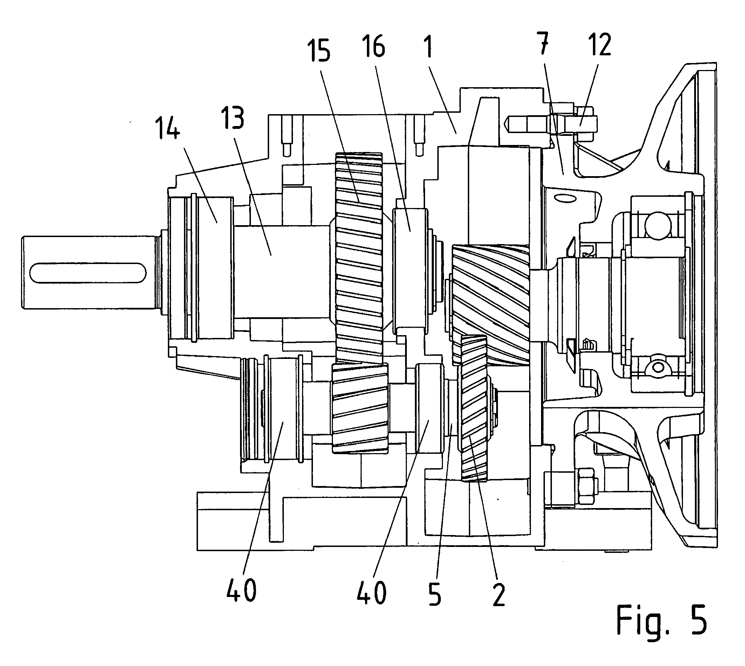

In Figur 5 ist im Vergleich zur Figur 4 eine andere eintriebseitige Übersetzung **einer gemäß dem erfindungsgemäßen Verfahren hergestellten Variante** realisiert, da das Motorritzel größer und das Zahnrad 2 kleiner ausgeführt ist.

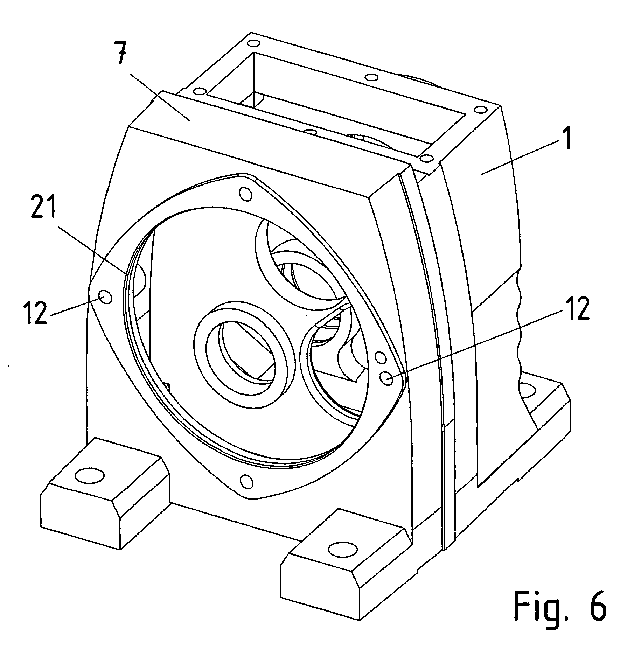

In Figur 6 ist das zur Figur 4 und 5 zugehörige Gehäuse des **gemäß dem erfindungsgemäßen Verfahren hergestellte** Getriebes gezeigt.

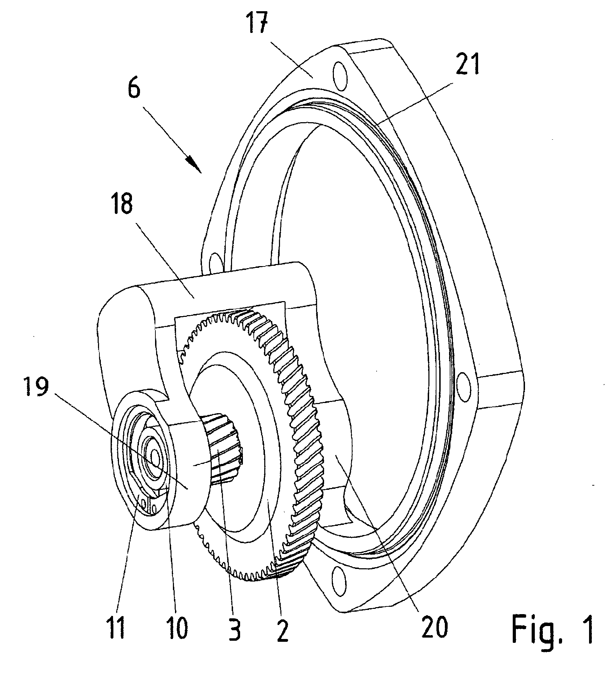

In Figur 1 ist zu sehen, dass das Gehäuse des Getriebemotors ein Gehäuseteil 1 umfasst, das die abtreibende Stufe umfasst. Dieses Gehäuseteil 1 ist mit einem Zwischenflansch 6 verbunden, mit dem wiederum ein Lagerschild, also ein ein Lager aufnehmendes Gehäuseteil, verbunden ist mittels axial ausgerichteter Verbindungsschrauben 12. Das Getriebe ist also von einem mindestens dreiteiligen Gehäuse umgeben.

Die Motorwelle des mit dem Getriebe verbundenen Elektromotors wird in einem vom Lagerschild aufgenommenen Lager gelagert. An ihrem axialen Endbereich trägt die Motorwelle eine Verzahnung oder ist mit einem Einsteckritzel oder Aufsteckritzel verbunden. Dieses steht im Eingriff mit einem Zahnrad, also mit einer Verzahnung 2 der eintreibenden Stufe, das auf einer Zwischenwelle angeordnet und mit dieser drehfest verbunden ist. An dieser Zwischenwelle ist eine weitere Verzahnung 3 vorgesehen, insbesondere die als Ritzel oder Verzahnungsbereich der Zwischenwelle ausgeführt ist.

Die Zwischenwelle ist mit zwei Lagern (8, 10) in dem Zwischenflansch 6 gelagert. Dabei ist der Zwischenflansch derart ausgeformt, dass er eine zur Gehäusebildung des Getriebes beitragende ringartige äußere Struktur umfasst, an der eine Haltestruktur ausgebildet ist, die die beiden Lager (8, 10) aufnimmt. Die Haltestruktur wiederum umfasst einerseits zwei ringförmige Abschnitte (19, 20), welche die Lager direkt aufnehmen und umgeben und andererseits zumindest einen Verbindungssteg 18, welcher diese beiden Abschnitte verbindet. Dabei weist dieser Verbindungssteg einen größeren Radialabstand zur gedachten Drehachse der Zwischenwelle auf als der Außenradius der mit der Zwischenwelle verbundenen Verzahnungen (2, 3). Außerdem verläuft der Verbindungssteg über den axialen Bereich der Verzahnungen (2, 3) hinweg. Die Lager (8, 10) sind mit in Nuten eingebrachten Sicherungsringen (9, 11) in axialer Richtung gesichert.

Der axiale Bereich der Verzahnungen (2, 3) ist verschieden vom axialen Bereich der ringartigen Struktur 17 und liegt näher an der Abtriebsstufe. Der Radialabstand der Verzahnungen (2, 3), der Radialabstand des Verbindungsstegs 18 und der Haltestruktur und der Radialabstand der ringförmigen Abschnitte (19, 20) von der Achse der Motorwelle ist kleiner als der Radialabstand der ringartigen äußeren Struktur 17.

Die ringartige äußere Struktur 17 weist an ihrem Umfang eine Ringnut 21 auf. Außerdem sind die Stirnseiten der ringartigen äußeren Struktur derart ausgeführt, dass eine ununterbrochene Fläche am Gehäuse ohne Montageaugen oder Demontagetaschen ausgeführt ist. Somit ist eine abgedichtete Verbindung mit dem Gehäuseteil 1 ermöglicht.

Mit der Verzahnung 3 steht wiederum ein Zahnrad 4 einer weiteren Zwischenstufe im Eingriff. Dieses Zahnrad 4 ist auf einer weiteren Zwischenwelle drehfest angeordnet, die wiederum eine Verzahnung aufweist oder ein Zahnrad aufweist, das mit einem Zahnrad, also Abtriebszahnrad, im Eingriff steht, das auf der abtreibenden Welle drehfest angeordnet ist.

Die Abtriebswelle 13 ist mittels der im Gehäuseteil 1 aufgenommenen Lager (14, 16) gelagert.

Das Distanzrohr 5 wird auf der Zwischenwelle axial vor dem Zahnrad 4 vorgesehen, so dass dieses Zahnrad 4 axial in Richtung der Abtriebsstufe gehalten ist. Das Distanzrohr 5 ist also auf der eintreibenden Stufe, also auf der dem Motor zugewandten Seite des Zahnrades 4 vorgesehen.

Die Mittelachse der Verzahnungen 4 und 2 sind parallel und in der gleichen Fußhöhe, also in der gleichen horizontalen Ebene, angeordnet, also auch mit gleichem Abstand über der Montagefläche des Getriebes.

Das Getriebe ist derart ausgeführt, dass nach Entfernen des Zwischenflansches 6 ein zweistufiges Getriebe ausführbar ist, indem das Lagerschild 7 direkt mit dem Gehäuseteil 1 verbunden wird. Hierbei wird allerdings das Distanzrohr 5 auf die andere Seite des Zahnrades 4, also axial näher an der abtreibenden Seite, angeordnet. Dabei steht also dann die Verzahnung der Motorwelle oder das auf der Motorwelle drehfest verbundene Ritzel im Eingriff mit dem Zahnrad 4.

### Bezugszeichenliste

- 1: Gehäuseteil
- 2: Verzahnung der eintreibenden Stufe
- 3: Verzahnung der Zwischenstufe
- 4: Verzahnung der Zwischenstufe
- 5: Distanzrohr
- 6: Zwischenflansch
- 7: Lagerschild
- 8: Lager
- 9: Sicherungsring
- 10: Lager
- 11: Sicherungsring
- 12: Verbindungsschraube
- 13: Abtriebswelle
- 14: Lager
- 15: Abtriebszahnrad
- 16: Lager
- 17: ringartige Struktur
- 18: Verbindungssteg
- 19: ringförmiger Abschnitt
- 20: ringförmiger Abschnitt
- 21: Ringnut

## Patentansprüche

1. Getriebemotor mit einem Gehäuse, das zumindest ein Gehäuseteil (1), einen Zwischenflansch (6) und ein Lagerschild (7) umfasst,
wobei das Gehäuseteil (1), der Zwischenflansch (6) und das Lagerschild (7) verbunden sind, wobei der Zwischenflansch (6) zwischen dem Gehäuseteil (1) und dem Lagerschild (7) angeordnet ist,
wobei das Lagerschild (7) ein Lager zur Lagerung der Motorwelle des Motors aufnimmt,
wobei der Zwischenflansch (6) zwei Lager einer Zwischenwelle aufnimmt,
wobei die Zwischenwelle eine erste Verzahnung aufweist oder ein eine erste Verzahnung (2, 3, 4) tragendes Teil aufweist, die mit einer mit der Motorwelle verbundenen Verzahnung (2, 3, 4) im Eingriff steht,
**dadurch gekennzeichnet, dass**
der Zwischenflansch (6) eine ringartige äußere Struktur (17) umfasst, an der eine Haltestruktur ausgebildet ist, die zwei ringförmige Abschnitte (19, 20) umfasst,
welche die Lager der Zwischenwelle aufnehmen und andererseits über zumindest einen Verbindungssteg (18) verbunden sind,
wobei der Radialabstand der Verzahnungen (2, 3), der Radialabstand des Verbindungsstegs (18) und der Haftestruktur und der Radialabstand der ringförmigen Abschnitte (19, 20) von der Achse der Motorwelle kleiner ist als der Radialabstand der ringartigen äußeren Struktur (17),
wobei die ringartige äußere Struktur (17) zwischen Gehäuseteil (1) und Lagerschild (7) angeordnet ist.

2. Getriebemotor nach einem der vorangegangenen Ansprüche,
**dadurch gekennzeichnet, dass**
die Lager jeweils axial gesichert sind mittels eines Sicherungsrings (9, 11)

3. Getriebemotor nach einem der vorangegangenen Ansprüche,
**dadurch gekennzeichnet, dass**
der axiale Bereich der ringartigen äußeren Struktur (17) verschieden ist vom axialen Bereich des Gehäuseteils (1) und des Lagerschilds (7).

4. Getriebemotor nach einem der vorangegangenen Ansprüche,
**dadurch gekennzeichnet, dass**
der axiale Bereich der ringartigen äußeren Struktur (17) verschieden ist vom axialen Bereich des Verbindungsstegs (18) und der ringförmigen Abschnitte (19, 20).

5. Getriebemotor nach einem der vorangegangenen Ansprüche,
**dadurch gekennzeichnet, dass**
der Zwischenflansch (6) zumindest an seiner dem Gehäuseteil (1) zugewandten Seite eine ununterbrochene Ringnut (21) aufweist, in der ein O-Ring einbringbar ist zum Herstellen einer dichten Verbindung zwischen Gehäuseteil (1) und Zwischenflansch (6),
und/oder dass
der Zwischenflansch (6) zumindest an seiner dem Lagerschild (7) zugewandten Seite eine ununterbrochene Ringnut (21) aufweist, in der ein O-Ring einbringbar ist zum Herstellen einer dichten Verbindung zwischen Lageschild und Zwischenflansch (6).

6. Getriebemotor nach einem der vorangegangenen Ansprüche,
**dadurch gekennzeichnet, dass**
der Zwischenflansch (6) ein Rundflansch ist.

7. Getriebemotor nach einem der vorangegangenen Ansprüche,
**dadurch gekennzeichnet, dass**
die Verbindungsschrauben (12) zur Verbindung des Lagerschildes mit dem Zwischenflansch (6) und/oder dem Gehäuseteil (1) radial außerhalb der Ringnut (21) vorgesehen sind, insbesondere in radial herausstehenden Eckbereichen eines Quadratflansches, in welchem die kreisförmige Ringnut (21) angeordnet ist.

8. Herstellverfahren für einen Getriebemotor mit einer wählbaren Getriebestufenzahl,
**dadurch gekennzeichnet, dass**
**bei einer gewählten ersten Stufenzahl der Getriebemotor nach einem der vorangegangenen Ansprüche hergestellt wird,**
**wobei** ein Distanzrohr (5) axial neben einem auf einer Welle des Getriebes drehfest verbundenen Zahnrad angeordnet ist, wobei das Distanzrohr (5)
- bei der ersten, insbesondere höheren, Stufenzahl des Getriebes, insbesondere bei einer dreistufigen Ausführung, motorseitig vom Zahnrad angeordnet wird,
- bei einer zweiten, insbesondere niedrigeren, insbesondere um eins niedrigeren Stufenzahl des Getriebes, insbesondere bei einer zweistufigen Ausführung, auf der vom Motor abgewandten Seite des Zahnrades angeordnet wird,
**bei der zweiten Stufenzahl das Gehäuseteil (1) direkt mit dem Lagerschild (7) verbunden wird, also kein Zwischenflansch (6) vorgesehen ist.**

## Claims

1. A geared motor with a housing which comprises at least a housing part (1), an intermediate flange (6) and a bearing bracket (7),
the housing part (1), the intermediate flange (6) and the bearing bracket (7) being connected, the intermediate flange (6) being arranged between the housing part (1) and the bearing bracket (7),
the bearing bracket (7) receiving a bearing for mounting the motor shaft of the motor,
the intermediate flange (6) receiving two bearings of an intermediate shaft,
the intermediate shaft having a first set of teeth or a part bearing a first set of teeth (2, 3, 4), which set of teeth is engaged with a set of teeth (2, 3, 4) connected to the motor shaft,
**characterised in that**
the intermediate flange (6) comprises a ring-like outer structure (17) on which a holding structure is formed which comprises two annular sections (19, 20) which receive the bearings of the intermediate shaft and at the other end are connected via at least one connecting bar (18),
the radial distance of the sets of teeth (2, 3), the radial distance of the connecting bar (18) and the holding structure, and the radial distance of the annular sections (19, 20) from the axis of the motor shaft being smaller than the radial distance of the ring-like outer structure (17),
the ring-like outer structure (17) being arranged between the housing part (1) and the bearing bracket (7).

2. A geared motor according to one of the preceding claims, **characterised in that** the bearings in each case are axially secured by means of a securing ring (9, 11).

3. A geared motor according to one of the preceding claims, **characterised in that** the axial region of the ring-like outer structure (17) is different from the axial region of the housing part (1) and of the bearing bracket (7).

4. A geared motor according to one of the preceding claims, **characterised in that** the axial region of the ring-like outer structure (17) is different from the axial region of the connecting bar (18) and of the annular sections (19, 20).

5. A geared motor according to one of the preceding claims,
**characterised in that**
the intermediate flange (6), at least on its side facing the housing part (1), has an uninterrupted annular groove (21) into which an O-ring can be introduced for producing a hermetic connection between the housing part (1) and the intermediate flange (6),
and/or **in that**
the intermediate flange (6), at least on its side facing the bearing bracket (7), has an uninterrupted annular groove (21) into which an O-ring can be introduced for producing a hermetic connection between the bearing bracket and the intermediate flange (6).

6. A geared motor according to one of the preceding claims, **characterised in that** the intermediate flange (6) is a round flange.

7. A geared motor according to one of the preceding claims, **characterised in that** the connecting screws (12) for connecting the bearing bracket to the intermediate flange (6) and/or the housing part (1) are provided radially outside the annular groove (21), in particular in radially protruding corner regions of a square flange in which the circular annular groove (21) is arranged.

8. A production method for a geared motor with a selectable gear stage number,
**characterised in that**
in the case of a selected first stage number the geared motor according to one of the preceding claims is produced,
wherein a spacer tube (5) is arranged axially next to a gear wheel which is connected in rotation-resistant manner to a shaft of the transmission, wherein the spacer tube (5)
- in the case of the first, in particular higher, stage number of the transmission, in particular in the case of a three-stage embodiment, is arranged on the motor side of the gear wheel,
- in the case of a second, in particular lower, stage number of the transmission, in particular which is lower by one, in particular in the case of a two-stage embodiment, is arranged on the side of the gear wheel which is remote from the motor,
in the case of the second stage number the housing part (1) is connected directly to the bearing bracket (7), i.e. no intermediate flange (6) is provided.

## Revendications

1. Motoréducteur, avec un carter qui comprend au moins un élément de carter (1), une bride intermédiaire (6) et un flasque (7),
sachant que l'élément de carter (1), la bride intermédiaire (6) et le flasque (7) sont reliés,
sachant que la bride intermédiaire (6) est disposée entre l'élément de carter (1) et le flasque (7),
sachant que le flasque (7) reçoit un palier pour le montage de l'arbre du moteur,
sachant que la bride intermédiaire (6) reçoit deux paliers d'un arbre intermédiaire, sachant que l'arbre intermédiaire présente une première denture ou un élément portant une première denture (2, 3, 4), denture qui est en prise avec une denture (2, 3, 4) reliée à l'arbre du moteur,
**caractérisé en ce que** la bride intermédiaire (6) comprend une structure extérieure annulaire (17) sur laquelle est formée une structure de maintien qui comprend deux parties annulaires (19, 20) qui reçoivent les paliers de l'arbre intermédiaire et qui sont d'autre part reliées par l'intermédiaire d'au moins une nervure de liaison (18),
sachant que la distance radiale des dentures (2, 3), la distance radiale de la nervure de liaison (18) et de la structure de maintien et la distance radiale des parties annulaires (19, 20) par rapport à l'axe de l'arbre du moteur est inférieure à la distance radiale de la structure extérieure annulaire (17),
sachant que la structure extérieure annulaire (17) est disposée entre l'élément de carter (1) et le flasque (7).

2. Motoréducteur selon la revendication précédente, **caractérisé en ce que** les paliers sont respectivement bloqués axialement au moyen d'un jonc d'arrêt (9, 11).

3. Motoréducteur selon l'une des revendications précédentes, **caractérisé en ce que** la région axiale de la structure extérieure annulaire (17) est différente de la région axiale de l'élément de carter (1) et du flasque (7).

4. Motoréducteur selon l'une des revendications précédentes, **caractérisé en ce que** la région axiale de la structure extérieure annulaire (17) est différente de la région axiale de la nervure de liaison (18) et des parties annulaires (19, 20).

5. Motoréducteur selon l'une des revendications précédentes, **caractérisé en ce que** la bride intermédiaire (6) présente, au moins sur son côté tourné vers l'élément de carter (1), une rainure annulaire ininterrompue (21) dans laquelle peut être introduit un joint torique afin de réaliser une liaison étanche entre l'élément de carter (1) et la bride intermédiaire (6),
et/ou **en ce que** la bride intermédiaire (6) présente, au moins sur son côté tourné vers le flasque (7), une rainure annulaire ininterrompue (21) dans laquelle peut être introduit un joint torique afin de réaliser une liaison étanche entre le flasque et la bride intermédiaire (6).

6. Motoréducteur selon l'une des revendications précédentes, **caractérisé en ce que** la bride intermédiaire (6) est une bride ronde.

7. Motoréducteur selon l'une des revendications précédentes, **caractérisé en ce que** les vis d'assemblage (12) pour relier le flasque à la bride intermédiaire (6) et/ou à l'élément de carter (1) sont prévues radialement à l'extérieur de la rainure annulaire (21), notamment dans des régions de coins radialement dépassantes d'une bride carrée dans laquelle est disposée la rainure annulaire circulaire (21).

8. Procédé de fabrication d'un motoréducteur doté d'un nombre sélectionnable d'étages de transmission,
**caractérisé en ce que**
pour un premier nombre sélectionné d'étages de transmission, le motoréducteur est réalisé selon l'une des revendications précédentes,
sachant qu'un tube d'écartement (5) est disposé axialement à côté d'une roue dentée liée en rotation sur un arbre du motoréducteur, sachant que le tube d'écartement (5)
- pour le premier nombre, notamment supérieur, d'étages de transmission, notamment pour une exécution à trois étages, est disposé côté moteur de la roue dentée,
- pour un deuxième nombre notamment inférieur d'étages de transmission, en particulier inférieur de un, en particulier pour une exécution à deux étages, est disposé sur le côté de la roue dentée qui est éloigné du moteur,
pour le deuxième nombre d'étages de transmission, l'élément de carter (1) est directement relié au flasque (7), il n'est donc pas prévu de bride intermédiaire (6).
